# EUROPÄISCHE PATENTSCHRIFT

(11) **EP 0 706 744 B1**
(45) Veröffentlichungstag und Bekanntmachung des Hinweises auf die Patenterteilung: **06.05.1998**
(21) Anmeldenummer: 94916881.9
(22) Anmeldetag: 07.06.1994
(51) Int. Cl.: H04Q 11/04, H04L 12/56

(54) **VERFAHREN ZUM BILDEN UND ANALYSIEREN VON INFORMATIONSELEMENTEORIENTIERTEN SIGNALISIERUNGSMELDUNGEN IN KOMMUNIKATIONSEINRICHTUNGEN**
PROCESS FOR SHAPING AND ANALYSING DATA COMPONENT ORIENTED SIGNALLING MESSAGES IN COMMUNICATIONS EQUIPMENT
PROCEDE PERMETTANT DE METTRE EN FORME ET D'ANALYSER DES MESSAGES DE SIGNALISATION ORIENTES ELEMENT D'INFORMATION DANS DES SYSTEMES DE COMMUNICATION

(30) Priorität: 30.06.1993 DE 4321776
(43) Veröffentlichungstag der Anmeldung: 17.04.1996
(73) Patentinhaber: SIEMENS AKTIENGESELLSCHAFT, 80333 München (DE)
(72) Erfinder: HUMMEL, Heinrich, D-85232 Bergkirchen (DE)
(86) Internationale Anmeldenummer: DE9400630
(87) Internationale Veröffentlichungsnummer: WO9501708

(56) Entgegenhaltungen:
- EP-A- 0 441 393
- INTERNATIONAL SWITCHING SYMPOSIUM, Bd.2, 25. Oktober 1992, YOKOHAMA Seiten 7 - 11, XP000337692 D.P.TRANCHIER,P.E.BOYER,Y.M.ROUAUD,J-Y.MAZ EAS. 'Fast Bandwidth Allocation in ATM Networks.'
- IEEE JOURNAL ON SELECTED AREAS IN COMMUNICATIONS., Bd.11, Nr.2, Februar 1993, NEW YORK Seiten 254 - 263, XP000377943 T.MOORS,A.CANTONI 'ATM Receiver Implementation Issues.'

## Beschreibung

Die Erfindung betrifft ein Verfahren zum Bilden bzw. Analysieren von Signalisierungsmeldungen in einer programmgesteuerten Kommunikationseinrichtung, wobei die Signalisierungsmeldungen Meldungskopfinformationen und daran angefügte, oktettorientierte und informationselementespezifische Informationen beinhaltende Informationselemente aufweisen.

Derart strukturierte Signalisierungsmeldungen sind insbesondere bei den CCITT (Comitee Consultative International Telefonique e Telegrafique) - standardisierten Signalisierungsprotokollen Q.931 und Q.93B vorgesehen. In der CCITT-Empfehlung Q.931 ist das Signalisierungsprotokoll für die dritte Protokollschicht eines ISDN (Integrated Services Digital Network) - Basisanschlusses definiert. Analog hierzu ist in der CCITT-Empfehlung Q.93B das Signalisierungsprotokoll für einen Breitband-ISDN-Basisanschluß standardisiert. Des weiteren ist für die Signalisierung in nach dem Asynchron - Transfermodus wirkenden Kommunikationsnetzen ein gleichartig strukturiertes Signalisierungsprotokoll vorgesehen. Bei diesen Signalisierungsprotokollen ist jede der einzelnen Signalisierungsmeldungen durch einen Signalisierungsmeldungskopf und daran angefügte Informationselemente gebildet. Der Signalisierungsmeldungskopf weist zumindest einen das verwendete Signalisierungsprotokoll anzeigenden Protokolldiskriminator, eine der Identifizierung der jeweiligen Verbindung im lokalen Netzwerk dienenden Verbindungsreferenzinformation und eine den Typ der Signalisierungsmeldung bestimmende Typeninformation auf. In den angefügten Informationselementen sind die eigentlichen Signalisierungsinformationen für den jeweiligen Typ einer Signalisierungsmeldung angegeben. Jeder dieser Informationselemente ist durch eine den Typ des Informationselementes anzeigende Typeninformation, eine die Anzahl der Oktetts der folgenden Signalisierungsinformationen anzeigenden Längeninformation - nur bei CCITT-Empfehlung Q.93B - und durch die angefügten Signalisierungsinformationen gebildet. Gemäß den vorhergehend angegebenen CCITT-Empfehlungen sind sowohl die Signalisierungsmeldungen als auch die Informationselemente oktettweise bzw. byteweise strukturiert. Die im Meldungskopf und in den angefügten Informationselementen enthaltenen bzw. einzufügenden Informationen werden beim Analysieren bzw. Generieren an die die Signalisierungsmeldungen weiterverarbeitenden vermittlungstechnischen Routinen weitergeleitet bzw. werden von diesen im Sinne des Bildens einer Signalisierungsmeldung übernommen.

Die der Erfindung zugrunde liegende Aufgabe besteht darin, ein Verfahren zum Analysieren bzw. Bilden eingangs erläuterter Signalisierungsmeldungen derart auszugestalten, daß die in den zu analysierenden bzw. gebildeten Signalisierungsmeldungen enthaltenen Informationen durch die vermittlungstechnischen Routinen in einer Kommunikationseinrichtung teilweise und zeitunabhängig übernehmbar sind. Die Aufgabe wird ausgehend von einem Verfahren zum Bilden bzw. Analysieren von Signalisierungsmeldungen gemäß Oberbegriff des Patentanspruchs 1 durch dessen kennzeichnende Merkmale gelöst.

Der wesentliche Aspekt des erfindungsgemäßen Verfahrens ist darin zu sehen, daß beim erstmaligen Bilden bzw. Analysieren jeder Signalisierungsmeldung ein die Signalisierungsmeldung speichernder Zwischenspeicher und ein Hilfsadressenspeicher eingerichtet wird, in den mit Hilfe einer Adressengenerierungsroutine die den Informationselementetyp bestimmenden Informationen und die Anfangsadressen der im Zwischenspeicher gespeicherten, informationselementespezifischen Informationen informationselementestrukturiert eingetragen werden. Das Vorliegen eines Hilfsadressenspeichers wird den weiterverarbeitenden Routinen - insbesondere den vermittlungstechnischen Routinen - durch Übermitteln einer Hinweisinformation angezeigt. Die weiterverarbeitenden Routinen rufen die eingetragenen Informationen mit Hilfe einer Abfrageroutine und des Hilfsadressenspeichers ab - Anspruch 6. Hierbei werden die den Informationselementetyp bestimmenden Informationen auf den gesuchten Informationselementetyp hin überprüft und nach dem Erkennen des gesuchten Informationselementetyps werden mit Hilfe der nachfolgenden Anfangsadressen die informationselementespezifischen Informationen aus dem Zwischenspeicher abgerufen. Durch diese Maßnahme sind die zwischengespeicherten Informationen von Signalisierungsmeldungen insbesondere für Mehrfachverbindungssteuerungen bei kurzen Zugriffszeiten beliebig oft durch die betroffenen, weiterverarbeitenden Routinen abrufbar. Die kurzen Zugriffszeiten werden vorteilhaft dadurch erreicht, daß nicht die Typeninformationen der zwischengespeicherten Signalisierungsmeldung, sondern die im Hilfsadressenspeicher eingetragenen Typeninformationen zur Überprüfung nach dem gesuchten bzw. zu selektierenden Informationselementetyp herangezogen werden. Beim Bilden von Signalisierungsmeldungen sind mit Hilfe von weiteren Informationselementeroutinen, Informationselemente bzw. Informationselementeinformation bildbar, deren den Informationselementetyp bestimmenden Informationen und die Anfangsadressen der informationselementespezifischen Informationen mit Hilfe der Adressengenerierungsroutine in weitere Informationselementespeicher des Hilfsadressenspeichers eingetragen werden - Anspruch 7. Durch diese Maßnahme wird erreicht, daß Signalisierungsmeldungen und der Hilfsadressenspeicher mit Hilfe von weiteren Informationselementeroutinen erweiterbar sind.

In den Signalisierungsmeldungen sind eine den Typ des jeweiligen Informationselementes bestimmende Informationen durch eine Typeninformation und die informationselementespezifischen Informationen durch Signalisierungsinformationen repräsentiert. In den Hilfsadressenspeicher werden informationselementeweise die Anfangsadressen der in den Signalisierungsmeldungen enthaltenen, im Zwischenspeicher gespeicherten Signalisierungsinformationen und die den Typ des jeweiligen Informationselementes anzeigenden Typeninformation sowie eine Verkettungsinformation eingetragen - Anspruch 2. Durch diese Verkettungsinformation wird angezeigt, ob dieses Informationselement das letzte des aktuellen Typs von Informationselementen darstellt oder ob zumindest ein weiteres Informationselement des gleichen Typs folgt - Anspruch 4. Mit Hilfe der Kettungsinformation kann bei Vorliegen mehrerer Informationselemente gleichen Typs das erste und die Reihenfolge der folgenden Informationselemente gleichen Typs bestimmt bzw. und in entsprechender Reihenfolge abgefragt werden. Durch das Speichern der zu analysierenden bzw. gebildeten Signalisierungsmeldungen in einem Zwischenspeicher und das Einrichten eines Hilfsadressenspeichers sowie das Eintragen von die den Informationselementetyp bestimmenden Informationen und der Anfangsadressen der informationselementespezifischen Informationen für jede Signalisierungsmeldung ist ein selektives und insbesondere ein mehrmaliges Abrufen der Informationsinhalte der zwischengespeicherten Informationselemente möglich. Durch dieses mehrmalige Abrufen gleicher informationselementespezifischer Informationen wird das Bilden von umfangreichen, kommunikationseinrichtungsinternen Signalisierungsmeldungen vermieden. Darüberhinaus bleibt für z.B. eine Quittierungsübertragung in Rückrichtungen die ursprüngliche Signalisierungsmeldung unverändert im Zwischenspeicher erhalten.

Gemäß den CCITT-Empfehlungen Q.931 und Q.93B ist in ein Informationselement eine Codesatzinformation einfügbar. Gemäß einer vorteilhaften Weiterbildung des erfindungsgemäßen Verfahrens ist die Anfangsadresse der im Zwischenspeicher gespeicherten Codesatzinformation in einen Codesatzspeicherbereich des jeweiligen Informationselementespeichers einfügbar - Anspruch 3. Durch diese Codesatzinformation ist der aktuell verwendete Meldungssatz eines Signalisierungsprotokolls bestimmt, z.B. der Meldungssatz für private Nebenstellenanlagen.

Vor einer Weiterverarbeitung der im Zwischenspeicher eingetragenen Signalisierungsmeldung ist diese hinsichtlich ihrer Signalisierungsprotokollkonformität überprüfbar. Dies wird besonders vorteilhaft dadurch erreicht, daß in einer Prüfspeicherstruktur für jede Art von Signalisierungsmeldung und die darin enthaltenen Informationselemente gemaß dem aktuell vorgesehenen Signalisierungsprotokoll signalisierungsprotokollkonforme Protokollinformationen gespeichert sind und nach dem Eintragen der den Informationselementetyp bestimmenden Informationen und der Anfangsadressen der zwischengespeicherten Signalisierungsinformationen in den Hilfsadressenspeicher die informationselementespezifischen und die den Informationselementetyp bestimmenden Informationen mit Hilfe des Hilfsadressenspeichers und einer Überprüfungsroutine informationselementeweise mit den Protokollinformationen der Prüfspeicherstruktur verglichen werden und bei nicht protokollgemäßen bzw. unvollständigen Signalisierungsmeldungen in einen Fehleranzeigespeicher Fehlerinformationen eingetragen werden - Anspruch 5. Durch die Auswertung dieser Fehlerinformationen wird entschieden, inwieweit die jeweilige Signalisierungsmeldung verworfen, geändert oder ergänzt werden muß.

Für das Einrichten, d.h. Belegen und Löschen eines entsprechenden Speicherbereichs für einen Hilfsadressenspeicher und eines Zwischenspeicher ist besonders vorteilhaft eine Einricht- und Löschroutine vorgesehen - Anspruch 8. Durch das Vorsehen einer derartigen Einricht- und Löschroutine kann ein Hilfsadressenspeicher und Zwischenspeicher beliebig vor einer Benutzung eingerichtet und insbesondere in einer beliebigen Zeitspanne nach dem Auftreten einer Signalisierungsmeldung gespeichert werden. Hierdurch sind besonders vorteilhaft Nachverarbeitungsmöglichkeiten dieser Informationen, z.B. bei Mehrfachverbindungen möglich. Besonders vorteilhaft werden der vorhergehend erläuterte Zwischenspeicher und der Hilfsadressenspeicher sowie die Einricht- und Löschroutine in einer Kommunikationseinrichtung - insbesondere einer Kommunikations-Nebenstellenanlage - durch ein Objekt in einer objektorientierten Programmstruktur realisiert.

Mit Hilfe einer Meldungskopfroutine sind die eingangs erläuterten Meldungskopfinformationen beim Bilden und Analysieren einer Signalisierungsmeldung und die Fehlerinformationen zu beliebigen Zeitpunkten steuerbar, d.h. sie werden bei einer zu analysierenden Signalisierungsmeldung separat bearbeitet, wie z.B. zwischengespeichert, bewertet und daraufhin modifiziert.

Im folgenden wird das erfindungsgemäße Verfahren anhand von zwei zeichnerischen Darstellungen näher erläutert. Dabei zeigen
- Fig. 1: eine das erfindungsgemäße Verfahren realisierende Kommunikationseinrichtung und

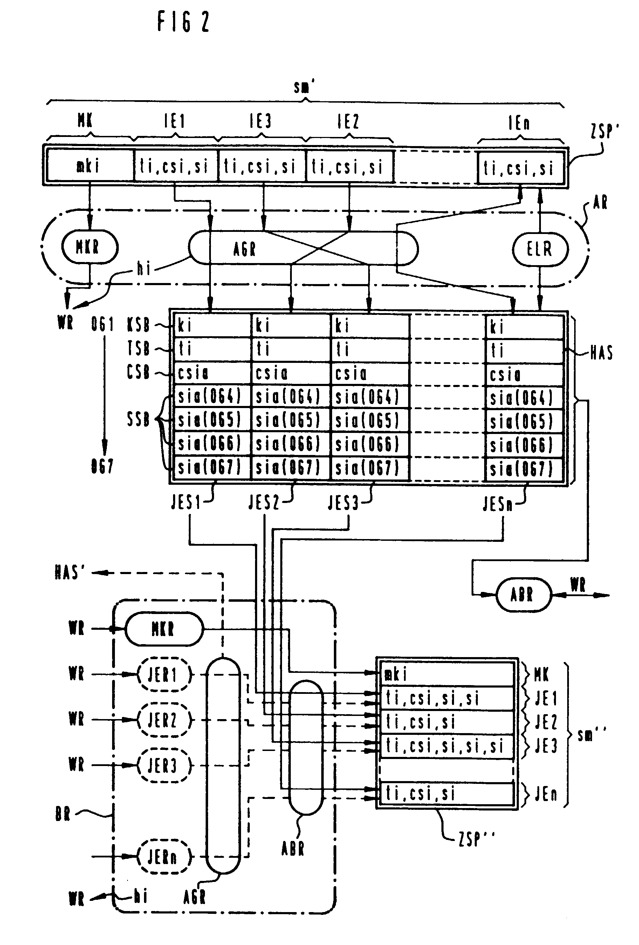

- Fig. 2: einen erfindungsgemäßen Zwischenspeicher und einen Hilfsadressenspeicher für eine zu bildende und eine zu analysierende Signalisierungmeldung sowie die hierzu vorgesehenen Routinen.

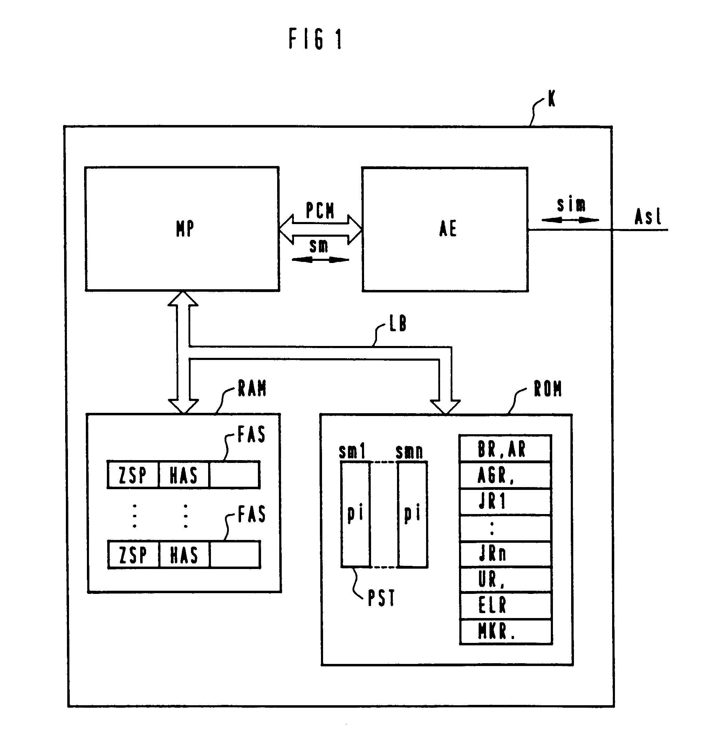

Fig. 1 zeigt eine Kommunikationseinrichtung K, in der eine die Kommunikationseinrichtung K steuernde und überwachende Steuereinrichtung MP angeordnet ist. Die Kommunikationseinrichtung K kann beispielsweise eine Kommunikations-Nebenstellenanlage oder ein Kommunikationsendgerät darstellen. Die Steuereinrichtung MP ist beispielsweise durch ein handelsübliches Mikroprozessorsystem realisiert. Diese Steuereinrichtung MP ist über einen durch beispielsweise Steuer-, Adreß- und Datenleitungen - nicht dargestellt - gebildetes lokales Bussystem LB mit einem Schreib-Lese-Speicher RAM und einem Lesespeicher ROM verbunden. In dem Lesespeicher ROM sind die zur Durchführung des erfindungsgemäßen Verfahrens erforderlichen, programmtechnisch realisierten Routinen und die für die Signalisierungsprotokollkonformitätsprüfung erforderliche Prüfspeicherstruktur PST gespeichert. Die erforderlichen Routinen stellen eine Analyse- bzw. Generierungsroutine AR, BR, eine Adressengenerierungsroutine AGR, Informationselementeroutinen IR1...IR, eine Überprüfungsroutine UR eine Einricht- und Löschroutine ELR und eine Meldungskopfroutine MKR dar. In der Prüfspeicherstruktur PST sind signalisierungsmeldungsindividuell (sm..n) Protokollinformationen pi gespeichert.

Im Schreib-Lesespeicher RAM werden temporär Zwischenspeicher ZSP und Hilfsadressenspeicher HAS einschließlich zugeordneter Fehleranzeigespeicher FAS mit Hilfe der Einricht- und Löschroutine ELR eingerichtet.

Die zentrale Steuerung MP ist über einen weiteren, z.B. PCM-orientierten, internen Systembus PCM mit einer Anschalteeinheit AE verbunden. Mit Hilfe dieser Anschalteeinheit AE werden die physikalischen und prozeduralen Anpassungen an eine Anschlußleitung ASL vorgenommen, die beispielsweise entweder an ein Kommunikationsendgerät oder an eine Kommunikations-Nebenstellenanlage geführt ist. Die über die Anschlußleitung ASL übermittelten Signalisierungsmeldungen sim gelangen nach einer physikalischen Anpassung als interne Signalisierungsmeldungen sm an die zentrale Steuereinrichtung MP bzw. werden von dieser über die Anschlußeinheit AE an die Anschlußleitung ASL übermittelt. Für das Ausführungsbeispiel sei angenommen, daß Signalisierungsmeldungen sm gemäß dem Signalisierungsprotokoll der CCITT-Empfehlungen Q.931 zu übermitteln bzw. zu bilden sind. Gemäß diesem Signalisierungsprotokoll sind die Signalisierungsinformationen sm in der dritten Protokollschicht von insgesamt sieben bei OSI stanardisierten Protokollschichten zu übermitteln bzw. zu übertragen. Durch die Anschlußeinheit AE werden die ersten beiden Protokollschichten, d.h. die die Bitübertragung bewirkende Übertragungs- und die die Übertragung sichernde Sicherungsschicht, realisiert. Die in die dritte Protokollschicht eingefügten Signalisierungsinformationen bewirken die Vermittlung der zu übermittelten Nachrichten in beispielsweise einer Kommunikations-Nebenstellenanlage. In der CCITT-Empfehlung Q.931 sind die Struktur der hierfür erforderlichen Signalisierungsmeldungen sm sowie die einfügbaren Signalisierungsinformationen definiert.

Bild 2 zeigt für eine zu analysierende und eine zu bildende Signalisierungsmeldung sm', sm'' jeweils einen Zwischenspeicher ZSP', ZSP'' einschließlich einer zu analysierenden bzw. gebildeten Signalisierungsmeldung sm', sm'' sowie einen Hilfsadressenspeicher HAS. Eine Signalisierungsmeldung sm', sm'' ist durch einen Meldungskopf MK und durch daran angefügte Informationselemente IE1..n gebildet. Die Reihenfolge der angefügten Informationselemente IE1..n ist beliebig. Für das Ausführungsbeispiel sei eine zu analysierende Signalisierungsmeldung sm' gemäß Bild 2 angenommen.

Mit Hilfe einer durch eine strichpunktiert dargestellte Analyseroutine AR angesteuerten Einricht- und Löschroutine ELR wird nach dem Erkennen einer zu analysierenden Signalisierungsmeldung sm' ein Zwischenspeicher ZSP und ein Hilfsadressenspeicher HAS im Arbeitsspeicher ROM der Kommunikationseinrichtung K eingerichtet. Dies bedeutet, daß ein auf die Anzahl der in der Signalisierungsmeldung sm' vorliegenden Informationselemente IE1..n abgestimmter Speicherplatz belegt und der Adressengenerierungs- bzw. der Analyseroutine AGR, AR bekannt gemacht wird. Nach dem Speichern der Signalisierungsmeldung sm' im Zwischenspeicher ZSP' werden mit Hilfe einer durch die Analyseroutine AR initierten Meldungskopfroutine MKR die im Meldungskopf MK eingefügten Meldungskopfinformationen mki im Sinne einer Weiterverarbeitung bzw. Bewertung an die betroffenen, weiterverarbeitenden Routinen WR gesteuert. Die Meldungskopfinformationen mki enthalten einen das verwendete Signalisierungsprotokoll anzeigenden - im Ausführungsbeispiel beispielsweise das Signalisierungsprotokoll gemäß der CCITT-Empfehlung Q.931 - Protokolldiskriminator, eine der Identifizierung der jeweiligen Verbindung im lokalen Netzwerk dienenden Verbindungsreferenzinformation und eine den Typ der Signalisierungsmeldung - beispielsweise eine Verbindungsaufbaumeldung - bestimmende Typeninformation.

Anschließend werden mit Hilfe der Adressengenerierungsroutine AGR die den Informationselementetyp bestimmenden Informationen ti und die Anfangsadressen a der informationselementespezifischen Informationen csi, si informationselementeweise in den Hilfsadressenspeicher HAS eingetragen, d.h. dort gespeichert. Im einzelnen handelt es sich dabei um eine den Typ des jeweiligen Informationselementes IE1..n anzeigende Typeninformation, um Anfangsadressen sia informationselementespezifischer Signalisierungsinformationen si und um eine den aktuell gültigen Meldungssatz anzeigende - beispielsweise ein Meldungssatz für private Nebenstellenanlagen - Codesatzinformation csia. Zusätzlich wird durch die Adressengenerierungsroutine AGR eine die Verkettung der Informationselemente IE1..n definierende Kettungsinformation ki gebildet und in den Hilfsadressenspeicher HAS eingetragen.

Für die Eintragung der vorhergehend erläuterten, die Informationselemente IE1..n bestimmenden Informationen ti, ki und der Anfangsadressen sia, csia, der Signalisierungs- und Codesatzinformationen csi, si ist jedem Informationselement IE1..n ein Informationselementespeicher IES zugeordnet. Jeder der Informationselementespeicher IES weist
- für die Kettungsinformationen ki einen Kettungspeicherbereich KSB,
- für die Typeninformationen ti einen Typenspeicherbereich TSB,
- für die Anfangsadresse csia der im Zwischenspeicher ZSP gespeicherten Codesatzinformationen csi einen Codesatzspeicherbereich CSB und
- für die Anfangsadressen sia der im Zwischenspeicher ZSP gespeicherten Signalisierungsinformationen si mehrere Signalisierungsinformationsspeicherbereiche SSB auf.

Der Informationselementespeicher IES ist des weiteren oktettweise strukturiert, d.h. für jede der vorhergehend erläuternden Speicherbereiche KSB, TSB, CSB, SSB ist eine Gruppe OG von Oktetts bzw. Bits vorgesehen. So sind beim Ausführungsbeispiel beispielhaft für die Kettungsinformation ki, die Typeninformation ti und die Anfangsadressen csia, cia der Codesatzinformation csi und der Signalisierungsinformationen si jeweils eine Gruppe OG von Oktetts, d.h. insgesamt sieben Gruppen OG1..7 vorgesehen. Hierdurch ist eine Anfangsadressenangabe in Anzahl von Oktetts, ausgehend vom ersten Oktett einer Signalisierungsmeldung sm' im Zwischenspeicher ZSP' angebbar.

Mit Hilfe einer programmtechnisch realisierten Abfrageroutine ABR können von den weiterverarbeitenden Routinen die zwischengespeicherten Informationen ti, csi, si der einzelnen Informationselemente IE1..n selektiv oder mehrmals abgerufen und weiterverarbeitet werden. Dies wird dadurch bewirkt, daß durch die Abfrageroutine ABR im Hilfsadressenspeicher HAS entsprechend des zu selektierenden Informationstypes die Typenspeicherbereiche TSB nach der relevanten Typeninformation ti überprüft werden und nach dem Feststellen des zu selektierenden Informationstypes werden mit Hilfen der Anfangsadressen csia, sia die zugeordneten Codesatz- und Signalisierungsinformationen csi, si aus dem Zwischenspeicher ZSP' gelesen, d.h. abgefragt, wobei beim Vorliegen mehrerer Informationselemente IE1..n gleichen Typs mit Hilfe der Kettungsinformation ki das erste und letzte Informationselement IE1..n gleichen Typs bestimmt und in entsprechender Reihenfolge abgefragt werden kann.

Des weiteren können die in dem Hilfsadressenspeicher HAS gespeicherten Informationen ki, ti, csia, sia für das Bilden einer Signalisierungsmeldung sm'' vorgesehen werden. Dies ist in einer Kommunikationseinrichtung K dann der Fall, wenn eine empfangene Signalisierungsmeldung sm' annähernd unverändert, jedoch auch modifiziert an eine weitere Kommunikationseinrichtung KE weitergeleitet werden soll. Für das Bilden einer derartigen Signalisierungsmeldung sm'' in einem weiteren Zwischenspeicher ZSP'' ist die durch eine Bildungsroutine BR - durch strichpunktierte Linien bestimmt - initialisierte Abfrageroutine ABR vorgesehen. Die Bildungsroutine weist zusätzlich eine Meldungskopfroutine MKR auf, mit deren Hilfe z.B. von einer weiteren Routine WR abgerufene Meldungskopfinformationen mki bzw. der Meldungskopf MK in die Signalisierungsmeldung sm'' im Zwischenspeicher ZSP eingefügt werden. Mit Hilfe der Abfrageroutine ABR und dem jeweiligen Hilfsadressenspeicher HAS werden die in der zwischengespeicherten Signalisierungsmeldung sm' gespeicherten Informationen ti, csi, si in die jeweiligen Bereiche der Informationselemente IE1..n der zu bildenden Signalisierungsmeldung sm'' im weiteren Zwischenspeicher ZSP'' eingefügt. Durch die unterschiedliche Anzahl von Signalisierungsinformationen si in den jeweiligen Informationselementen IE1..n ist angedeutet, daß nur diejenigen Informationsinhalte der Signalisierungsinformationen si in die zu bildende Signalisierungsmeldung sm'' eingefügt werden, für die im Hilfsadressenspeicher HAS Anfangsadressen a eingetragen sind.

Bei diesem Bilden der Signalisierungsmeldung sm'' werden im wesentlichen mit den im Hilfsadressenspeicher HAS gespeicherten Anfangsadressen a die im Zwischenspeicher ZSP' hinterlegten informationselementeindividuellen Informationen ti, csi, si in einen für die zu bildenden Signalisierungsmeldung sm'' eingerichteten weiteren Zwischenspeicher ZSP'' kopiert. Liegen jedoch keine im Hilfsadressenspeicher HAS hinterlegten Informationen ki, ti, csia, sia vor, d.h. es wird erstmals eine Signalisierungsmeldung sm'' gebildet, so werden mit Hilfe hierfür vorgesehener Informationselementeroutinen IER1'..n' die informationselementespezifischen Informationen ti, csi, si gebildet und anschließend sowohl zu einer Signalisierungsmeldung sm'' im Zwischenspeicher ZSP'' zusammengestellt als auch die den Informationselementetyp bestimmenden Informationen ti, ki und die Anfangsadressen der im Zwischenspeicher ZSP gespeicherten informationselementespezifischen Informationen csia, sia in einen weiteren Hilfsadressenspeicher HAS' eingetragen.

Nach dem Bilden bzw. Analysieren einer Signalisierungsmeldung sm', sm'' werden der im Arbeitsspeicher RAM der Kommunikationseinrichtung K eingerichteten Zwischenspeicher ZSP und der Hilfsadressenspeicher HAS für eine anderweitige Verwendung freigegeben.

## Patentansprüche

1. Verfahren zum Bilden bzw. Analysieren von Signalisierungsmeldungen (sm) in einer programmgesteuerten Kommunikationseinrichtung (K), wobei die Signalisierungsmeldungen (sm) einen Meldungskopf (MK) und daran angefügte, den Informationselementetyp bestimmende und informationselementespezifische Informationen beinhaltende Informationselemente (IE) aufweisen,
**dadurch gekennzeichnet,**
- daß für jede erstmalig zu analysierende bzw. bildende Signalisierungsmeldung (sm) ein die Signalisierungsmeldung (sm) speichernder Zwischenspeicher (ZSP) und ein Zwischenspeicheradressen (a) speichernder Hilfsadressenspeicher (HAS) eingerichtet wird,
- daß mit Hilfe einer Adressengenerierungsroutine (AGR) die den jeweiligen Informationselementetyp bestimmenden Informationen (ti, ki) und die Anfangsadressen (csia, sia) der im Zwischenspeicher ZSP zwischengespeicherten informationselementespezifischen Informationen (csi, si) bestimmt und informationselementeweise in den Hilfsadressenspeicher (HAS) eingetragen werden,
- und daß das Vorliegen eines Hilfsadressenspeichers (HAS) den weiterarbeitenden Routinen (WR) der Kommunikationseinrichtung (K) durch Übermitteln einer Hinweisinformation (hi) angezeigt wird.

2. Verfahren nach Anspruch 1,
**dadurch gekennzeichnet,**
daß die den Informationselementetyp bestimmende Information durch eine Typeninformation (ti) und die die informationselementespezifischen Informationen bestimmenden Informationen durch Signalisierungsinformationen (si) repräsentiert sind,
- daß in einem im Hilfsadressenspeicher (HAS) jedem Informationselement (IE) zugeordneten Informationselementespeicher (IES)
. in einen Kettungsspeicherbereich (KSB) eine die Verkettung der Informationselemente (IE) definierende Kettungsinformation (ki),
. in einen Typenspeicherbereich (TSB) die Typeninformation (ti) und
. in Signalisierungsinformations-Speicherbereiche (SSB) die Anfangsadressen (sia) der oktettorientierten Gruppen von im Zwischenspeicher (ZSP) gespeicherten Signalisierungsinformationen (si) eingetragen werden.

3. Verfahren nach Anspruch 1 oder 2,
**dadurch gekennzeichnet,**
daß eine informationselementespezifische Information durch ein eine den aktuellen Meldungssatz anzeigende Codesatzinformation (csi) repräsentiert ist,
daß in einen Codesatzspeicherbereich (CSB) des jeweiligen Informationselementespeichers (IES) die Anfangsadresse (csia) der im Zwischenspeicher (ZSP) gespeicherten Codesatzinformationen (csi) eingetragen wird.

4. Verfahren nach einem der vorhergehenden Ansprüche,
**dadurch gekennzeichnet,**
daß die Kettungsinformation (ki) durch eine das letzte Informationselement (IE) gleichen Typs oder zumindest ein folgendes Informationselement (IE) gleichen Typs anzeigende Information (ki) gebildet ist.

5. Verfahren nach einem der vorhergehenden Ansprüche,
**dadurch gekennzeichnet,**
daß in einer Prüfspeicherstruktur (PST) für jede Art von Signalisierungsmeldung (sm) und die darin enthaltenen Informationselemente (IE) gemäß dem aktuellen vorgesehenen Signalisierungsprotokoll signalisierungsprotokollkonforme Protokollinformationen (pe) gespeichert sind, daß nach dem Eintragen der Informationen (ki, ti, csia, sia) in den Hilfsadressenspeicher (HAS) die Informationen (ti, csi, si) der zwischengespeicherten Signalisierungsmeldung (sm) mit Hilfe einer Überprüfungsroutine (UR) und des Hilfsadressenspeichers (HAS) informationselementeweise mit den eingetragenen Protokollinformationen (pi) der Prüfspeicherstruktur (PST) verglichen und bei nicht protokollgemäßen bzw. unvollständigen Signalisierungsmeldungen (sm) in einen Fehleranzeigespeicher (FAS) Fehlerinformationen (fi) eingetragen werden.

6. Verfahren nach einem der vorhergehenden Ansprüche,
**dadurch gekennzeichnet,**
daß durch weiterverarbeitende Routinen (WR) mit Hilfe einer Abrufroutine (ABR) und dem Hilfsadressenspeicher (HAS) die im Zwischenspeicher (ZSP) gespeicherten Informationen (ti, csi, si) der Signalisierungsmeldung (sm) abrufbar sind.

7. Verfahren nach einem der vorhergehenden Ansprüche,
**dadurch gekennzeichnet,**
daß mit Hilfe weiterer Informationselementeroutinen (IR) und der Adressengenerierungsroutine (AGR) beim Bilden von Signalisierungsmeldungen (sm) die im Zwischenspeicher (ZSP) gespeicherte Signalisierungsmeldung (sm) durch weitere Informationselemente (IE) und im eingerichteten Hilfsadressenspeicher (HAS) durch weitere in Informationselementespeicher (IES) eintragbare Informationen (ki, ti, csia, sia) ergänzbar ist.

8. Verfahren nach einem der vorhergehenden Ansprüche,
**dadurch gekennzeichnet,**
daß für ein Einrichten oder ein Löschen eines Zwischenspeichers (ZSP) und eines Hilfsadressenspeichers (HAS) eine Einricht- bzw. Löschroutine (ELR) vorgesehen ist.

9. Verfahren nach einem der vorhergehenden Ansprüche,
**dadurch gekennzeichnet,**
daß mit Hilfe einer Meldungskopfroutine (MKR) die im Meldungskopf (MK) einer Signalisierungsmeldung (sm) enthaltenen Meldungskopfinformationen (mki) sowie die Fehlerinformationen (fi) gesteuert werden.

10. Verfahren nach einem der vorhergehenden Ansprüche,
**dadurch gekennzeichnet,**
daß die Signalisierungsmeldungen (sm) und deren Informationselemente (IE) gemäß den CCITT-Empfehlungen Q.931 und Q.93B strukturiert sind.

## Claims

1. Process for forming and analyzing signalling messages (sm) in a program-controlled communication device (KE), the signalling messages (sm) having a message header (MK) and information elements (IE) appended thereto, defining the information element type and comprising information element-specific information items, characterized
- in that, for each signalling message (sm) to be analyzed or formed for the first time, there is set up a buffer store (ZSP), storing the signalling message (sm), and an auxiliary address store (HAS), storing the buffer store addresses (a),
- in that, with the aid of an address generation routine (AGR), the information items (ti, ki) defining the respective information element type and the initial addresses (csia, sia) of the information element-specific information items (csi, si) buffer-stored in the buffer store ZSP are defined and entered on an information element basis into the auxiliary address store (HAS),
- and in that the existence of an auxiliary address store (HAS) is indicated to the further processing routines (WR) of the communication device (KE) by transmitting an indicative information item (hi).

2. Process according to Claim 1, characterized in that the information item defining the information element type is represented by a type information item (ti) and the information items defining the information element-specific information items are represented by signalling information items (si),
- in that, in an information element store (IES) which is in the auxiliary address store (HAS) and is assigned to each information element (IE), there are entered
. into a linking store area (KSB), a linking information item (ki) defining the linking of the information elements (IE),
. into a type store area (TSB), the type information item (ti) and
. into signalling information store areas (SSB), the initial addresses (sia) of the octet-oriented groups of signalling information items (si) stored in the buffer store (ZSP).

3. Process according to Claim 1 or 2, characterized that an information element-specific information item is represented by a code record information item (csi) indicating the current message record,
in that there is entered into a code record store area (CSB) of the respective information element store (IES) the initial address (csia) of the code record information items (csi) stored in the buffer store (ZSP).

4. Process according to one of the preceding claims, characterized
in that the linking information item (ki) is formed by an information item (ki) indicating the last information element (IE) of the same type or at least a following information element (IE) of the same type.

5. Process according to one of the preceding claims characterized
in that there are stored in a test memory structure (PST) for each type of signalling message (sm) and the information elements (IE) contained therein signalling protocol-conformal protocol information items (pe) according to the currently provided signalling protocol, in that, following entry of the information items (ki, ti, csia, sia) into the auxiliary address store (HAS), the information items (ti, csi, si) of the buffer-stored signalling message (sm) are compared on an information element basis with the entered protocol information items (pi) of the test store structure (PST) with the aid of a checking routine (UR) and the auxiliary address store (HAS), and error information items (fi) are entered into an error indication store (FAS) if signalling messages (sm) do not conform to the protocol or are incomplete.

6. Process according to one of the preceding claims, characterized
in that the information items (ti, csi, si), stored in the buffer store (ZSP), of the signalling message (sm) can be retrieved by further processing routines (WR) with the aid of a retrieve routine (ABR) and the auxiliary address store (HAS).

7. Process according to one of the preceding claims, characterized
in that, when forming signalling messages (sm), further information element routines (IR) and the address generation routine (AGR) can be employed to supplement the signalling message (sm) stored in the buffer store (ZSP) by further information elements (IE) and in the set-up auxiliary address store (HAS) by further information items (ki, ti, csia, sia) which can be entered into information element stores (IES).

8. Process according to one of the preceding claims, characterized
in that, for a setting up or clearing of a buffer store (ZSP) and an auxiliary address store (HAS), a setting-up and clearing routine (ELR) is provided.

9. Process according to one of the preceding claims, characterized
in that, with the aid of a message header routine (MKR), the message header information items (mki), contained in the message header (MK) of a signalling message (sm), and also the error information items (fi) are controlled.

10. Process according to one of the preceding claims, characterized
in that the signalling messages (sm) and their information elements (IE) are structured according to CCITT recommendations Q.931 and Q.93B.

## Revendications

1. Procédé pour former et analyser des messages de signalisation (sm) dans un dispositif de communication (K) commandé par programme, les messages de signalisation (sm) comportant un en-tête de message (MK) et des éléments d'information (IE) adjoints à celui-ci, déterminant le type d'élément d'information et contenant des informations spécifiques aux éléments d'information,
caractérisé par le fait que
- pour chaque message de signalisation (sm) à analyser ou formé pour la première fois, on agence une mémoire temporaire (ZSP) mémorisant le message de signalisation (sm) et une mémoire d'adresses auxiliaire (HAS) mémorisant des adresses (a) en mémoire temporaire,
- à l'aide d'une routine de génération d'adresses (AGR), on détermine et on enregistre pour chaque élément d'information dans la mémoire d'adresses auxiliaire (HAS) les informations (ti, ki) déterminant le type d'élément d'information concerné et les adresses de début (csia, sia) des informations (csi, si) spécifiques aux éléments d'information et mémorisées temporairement dans la mémoire temporaire (ZSP),
- et on signale la présence d'une mémoire d'adresses auxiliaire (HAS) aux routines de traitement ultérieur (WR) du dispositif de communication (K) en leur transmettant une information d'avis (hi).

2. Procédé selon la revendication 1,
caractérisé par le fait que
l'information déterminant le type d'élément d'information est représentée par une information de type (ti) et les informations déterminant les informations spécifiques aux éléments d'information sont représentées par des informations de signalisation (si),
- dans une mémoire d'élément d'information (IES) attribuée dans la mémoire d'adresses auxiliaire (HAS) à chaque élément d'information (IE), on enregistre
. dans une zone de mémoire de chaînage (KSB) une information de chaînage (ki) déterminant le chaînage des éléments d'information (IE),
. dans une zone de mémoire de type (TSB) l'information de type (ti), et
. dans des zones de mémoire d'informations de signalisation (SSB) les adresses de début (sia) des groupes, pour octets, d'informations de signalisation (si) mémorisées dans la mémoire temporaire (ZSP).

3. Procédé selon la revendication 1 ou 2,
caractérisé par le fait que
une information spécifique à l'élément d'information est représentée par une information de jeu de codes (csi) indiquant le jeu de messages actuel,
on enregistre dans une zone de mémoire de jeu de codes (CSB) de la mémoire d'élément d'information (IES) concernée l'adresse de début (csia) des informations de jeu de codes (csi) mémorisées dans la mémoire temporaire (ZSP).

4. Procédé selon l'une des revendications précédentes,
caractérisé par le fait que
l'information de chaînage (ki) est formée d'une information (ki) indiquant le dernier élément d'information (IE) de même type ou au moins un élément d'information (IE) suivant de même type.

5. Procédé selon l'une des revendications précédentes,
caractérisé par le fait que
on mémorise dans une structure de mémoire de contrôle (PST), pour chaque type de message de signalisation (sm) et pour les éléments d'information (lE) contenus à l'intérieur, selon le protocole de signalisation prévu actuellement, des informations de protocole (pi) conformes au protocole de signalisation, après l'enregistrement des informations (ki, ti, csia, sia) dans la mémoire d'adresses auxiliaire (HAS), on compare les informations (ti, csi, si) du message de signalisation sm) mémorisé temporairement, à l'aide d'une routine de contrôle (UR) et à l'aide de la mémoire d'adresses auxiliaire (HAS) pour chaque élément d'information, aux informations de protocole enregistrées (pi) de la structure de mémoire de contrôle (PST) et, en cas de messages de signalisation (sm) incorrects ou incomplets du point de vue du protocole, on enregistre des informations d'erreur (fi) dans une mémoire d'indication d'erreur (FAS).

6. Procédé selon l'une des revendications précédentes,
caractérisé par le fait que
d'autres routines de traitement ultérieur (WR) peuvent appeler à l'aide d'une routine d'appel (ABR) et à l'aide de la mémoire d'adresses auxiliaire (HAS) les informations (ti, csi, si), mémorisées dans la mémoire temporaire (ZSP), du message de signalisation (sm).

7. Procédé selon l'une des revendications précédentes,
caractérisé par le fait que,
à l'aide d'autres routines d'éléments d'information (IR) et de la routine de génération d'adresses (AGR), lors de la formation de messages de signalisation (sm), on peut compléter le message de signalisation (sm) mémorisé dans la mémoire temporaire (ZSP) par d'autres éléments d'information (IE) et, dans la mémoire d'adresses auxiliaire (HAS) affectée, par d'autres informations (ki, ti, csia, sia) pouvant être enregistrées dans des mémoires d'éléments d'information (IES).

8. Procédé selon l'une des revendications précédentes,
caractérisé par le fait que
l'on prévoit pour l'affectation ou l'effacement d'une mémoire temporaire (ZSP) et d'une mémoire d'adresses auxiliaire (HAS) une routine d'affectation et d'effacement (ERL).

9. Procédé selon l'une des revendications précédentes,
caractérisé par le fait que,
à l'aide d'une routine d'en-tête de message (MKR), on gère les informations d'en-tête de message (mki) contenues dans l'en-tête de message (MK) d'un message de signalisation (sm) ainsi que les informations d'erreur (fi).

10. Procédé selon l'une des revendications précédentes,
caractérisé par le fait que
les messages de signalisation (sm) et leurs éléments d'information (IE) sont structurés conformément aux recommandations Q.931 et Q.93B du CCITT.
